(19) Europäisches Patentamt
European Patent Office
Office européen des brevets

(11) **EP 3 916 667 A1**

(12) **EUROPEAN PATENT APPLICATION**

(43) Date of publication:
**01.12.2021 Bulletin 2021/48**

(51) Int Cl.:
**G06Q 40/04** (2012.01)  **G06F 17/18** (2006.01)
**G06Q 40/06** (2012.01)

(21) Application number: **20305566.0**

(22) Date of filing: **29.05.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Fortia Financial Solutions**
**75008 Paris (FR)**

(72) Inventors:
• **FERRADANS, Sira**
**75019 PARIS (FR)**
• **KCHOUK, Mohamed Mehdi**
**92310 ISSY LES MOULINEAUX (FR)**

(74) Representative: **Cabinet Beau de Loménie**
**158, rue de l'Université**
**75340 Paris Cedex 07 (FR)**

(54) **REAL-TIME TIME SERIES PREDICTION FOR ANOMALY DETECTION**

(57)    A method for operating a real-time time series prediction model includes obtaining a first sequence corresponding to a target time series; obtaining a second sequence corresponding to a peer time series of the target time series; determining whether a predetermined number of time steps have elapsed since a last retraining of the real-time time series prediction model; and if the predetermined number of time steps have elapsed since the last retraining of the time series prediction model, retraining the real-time time series prediction model using a first portion of the first and second sequences; and applying a remaining portion of the first and second sequences to the real-time time series prediction model to predict a next value of the target time series.

**100**

**102**

**FIG.1**

EP 3 916 667 A1

**Description**

Field

The present disclosure relates to improving the speed, accuracy, and stability of real-time, model-based time series prediction for anomaly detection.

Technical Background

A time series is a sequence of data points recorded at specific times. Generally, time series data has a natural temporal ordering, which makes its processing/analysis different from common data processing, in which observations have no natural ordering, and from spatial data analysis, in which observations typically relate to geographic locations.

Time series anomaly detection refers to the problem of finding data points in a time series that do not conform to expected behavior. Time series anomaly detection finds uses in a variety of applications ranging from machinery operation (e.g., airplanes, cars, manufacturing plants) to network intrusion detection.

Various approaches exist for time series anomaly detection. In general, these can be summarized as:

Generative models: a generative probability density function of the data is estimated, and then, given a threshold defining boundaries, a value is determined to be anomalous if it belongs to a low probability area and normal if it is outside this area;

Distance based: a pairwise-distance function between data points is used to compare similarity between them; the data points are tagged as anomalous if they are very different (common examples of this approach include nearest-neighbor and clustering methods);

Reconstruction-based approaches: given a data point, a reconstructed value is determined based on a learned model of the data; an anomaly is detected based on the reconstruction error; and

Classification based approaches: given a training set, borders delimiting normal areas are determined, and a data point is considered as anomalous if it falls outside the borders.

A detailed description of these various approaches can be found for example in Pimentel et al., "A review of novelty detection - University of Oxford, 2 Jan. 2014, http://www.robots.ox.ac.uk/~davidc/pubs/NDreview2014.pdf."

In certain applications, particularly those in which data translates into actionable information, highly accurate and fast time series anomaly detection is a key requirement.

For example, in the context of a machine (e.g., airplane) that is operated on the basis of sensor data, the sensor data represents time series data that is translated into actions for operating the machine. Improper operation and even failure can ensue if anomalies in the sensor data are not detected accurately and quickly.

As another example, in the financial field, an investment fund is required to publish the Net Asset Value (NAV) of its share classes at a defined frequency (e.g., daily, weekly, monthly, etc.). The NAV of a share class over time represents a time series. Due to the high significance of the NAV data, the NAVs must be verified before publication. Due to the sheer volume of data as well as the time consuming and tedious NAV calculation process, an automated anomaly detection system may be used for verifying the computed NAVs before publication. The system thus must be sufficiently fast as the verification process may need to be executed daily.

Furthermore, as every data point that is detected as an anomaly may require human verification, the system must have a low false positive rate.

An added requirement may be that the system is a real-time system, i.e., designed to act on live data streams (rather than on static datasets) and/or that the system is capable of handling noisy data, i.e., data streams characterized by a high noise-to-signal ratio that obscures the true values of the data.

Existing approaches are not suited for such demanding applications and requirements. For example, some of the above-described methods rely on risk metrics (such as daily variation thresholding, Gaussian thresholding on fund returns, and adaptive Gaussian thresholding) which result in large numbers of false positives. Other methods are too slow in the face of high data volume and become unstable when used with real-time, noisy data.

The present invention has been made in the light of the above problems.

Brief Summary

Embodiments of the present disclosure provide a computer-implemented method for operating a real-time time series prediction model. In an embodiment, the method comprises:

obtaining a first sequence of data points corresponding to a target time series, the target time series belonging to a first category of time series;
obtaining a second sequence of data points corresponding to a peer time series of the target time series, the peer time series belonging to the first category of time series or to a second category of time series other than the first category of time series;
determining whether a predetermined number of time steps have elapsed since a last retraining of the real-time time series prediction model; and
if the predetermined number of time steps have elapsed since the last retraining of the time series prediction model,

retraining the real-time time series prediction model using a first portion of the first and second sequences of data points; and
applying a remaining portion of the first and second sequences of data points to the real-time time series prediction model to predict a next value of the target time series.

In an embodiment, the method is performed repeatedly at discrete time instants (time steps). In an embodiment, at each time step, a predicted next value of the target time series is generated. A received next value of the target time series may also be received at said time step. The received next value may be compared with the predicted next value to determine whether the received next value is an anomaly.

In an embodiment, the received next value of the target time series is received according to a determined period. In an embodiment, the method is performed for every received next value of the target time series. In an embodiment, the interval between consecutive time steps corresponds to the period at which the next value is received.

The periodic retraining of the time series prediction model mitigates against model instability. This is particularly advantageous in the case of a real-time prediction model, i.e., a model intended to receive data in real-time and to compute predictions in a very rapid manner. Additionally, the retraining reduces the impact of noise, which is inherent in certain types of data streams, on the stability of the model.

When the peer time series belongs to the first category, the prediction model analyzes the behavior of the target time series within the first category of time series. The first category may represent a smaller ecosystem containing the target time series.

When the peer time series belongs to the second category, the prediction model analyzes the behavior of the target time series outside the first category. The second category may encompass a larger ecosystem that impacts the target time series.

In an embodiment, the method may be executed using at least one peer time series belonging to the first category and also executed using at least one peer time series belonging to the second category. The prediction results from the executions may be combined to generate a single prediction result. Accordingly, a more granular prediction of the target time series may be achieved because behaviors within both the first category and the second category are considered.

The use of a first portion of the first and second data sequences for retraining and of the remaining portion for prediction using the prediction model has the technical effect of guaranteeing the temporal consistency of the data. This is in contrast to traditional methods which randomly sample the data sequences, resulting in the dependencies between the data points being lost.

In an embodiment, if the predetermined number of time steps have not elapsed since the last retraining of the time series prediction model, the method comprises applying the first sequence of data points and the second sequence of data points in their entirety to the real-time time series prediction model to predict the next value of the target time series.

The predetermined number of time steps may depend on the update frequency of the target time series and/or the nature of the time series. Additionally, the predetermined number of time steps may be selected to reduce the impact of singularities on the system.

In an embodiment, the value of the predetermined number of time steps is determined empirically. In an embodiment, the target time series updates daily, and the predetermined number of time steps is equal to 5.

In an embodiment, where the peer time series belongs to the first category of time series, obtaining the second sequence of data points corresponding to the peer time series of the target time series comprises:

selecting a time series other than the target time series from the first category of time series; and
obtaining the second sequence of data points based on the selected time series.

In an embodiment, where the peer time series belongs to the second category of time series, obtaining the second sequence of data points corresponding to the peer time series of the target time series comprises:

creating a pool of time series comprising time series belonging to one or more categories other than to the first category of time series;

selecting a time series from the pool of time series having a correlation with the target time series within a predetermined correlation range; and

obtaining the second sequence of data points based on the selected time series.

In an embodiment, the method comprises concatenating the first sequence of data points and the second sequence of data points to generate a combined sequence of data points. In an embodiment, the retraining and the applying of the first and second data sequences to the prediction model are performed using the combined sequence of data points.

In an embodiment, the time series prediction model comprises an autoregressive model of order p. In an embodiment, the order p is equal to 10. However, in other embodiments, the order p may be lower or higher depending on the nature of the time series. An autoregressive model may be advantageous due to the very short computing time required for a given iteration. This is particularly significant when the model is used in real-time on a very large number of target time series.

In an embodiment, the time series prediction model is a regression model based on a Long Short-Term Memory (LSTM) Recurrent Neural Network (RNN) architecture. The prediction model is trained to build a regression model of the target time series, which is then used to generate the prediction.

In an embodiment, the method comprises pre-processing the first and second sequences of data points. The pre-processing may be performed prior to applying the sequences to the prediction model for retraining or online prediction.

The pre-processing mitigates against instability of the prediction model. This is especially the case when the target time series and/or some of its peer time series (intra-category and inter-category peer time series) have wide ranging intrinsic magnitudes.

In an embodiment, the pre-processing comprises for each of the first and second sequences:

applying a logarithmic transformation to the data points of the sequence;

slicing the sequence into a plurality of segments of predetermined length;

scaling the plurality of segments to generate a plurality of scaled segments; and

re-assembling the plurality of scaled segments to obtain the pre-processed first and second sequences of data points.

In an embodiment, scaling the plurality of segments comprises, for each segment of the plurality of segments, scaling each data point of the segment using a scaler. In an embodiment, the scaler is a min-max scaler.

In an embodiment, the above-described method for time series prediction may be used within an anomaly detection system/method. The anomaly detection system/method is configured to detect whether or not a received next value of the target time series is an anomaly, based on a predicted next value of the target time series computed using the above-described time series prediction method.

Accordingly, embodiments also provide a method/system for anomaly detection that may comprise the above-described method for time series prediction.

In an embodiment, the method for anomaly detection comprises:

receiving the next value of the target time series; and

determining that the received next value is an anomaly when the next value falls outside a confidence interval around the predicted next value of the target time series.

In an embodiment, the method for anomaly detection further comprises generating the confidence interval as a function of a mean prediction error computed over a preceding window of a predetermined length.

In an embodiment, the target time series corresponds to a Net Asset Value (NAV) time series of a share class of a fund, the first category of time series comprises NAV time series of share classes belonging to the fund, and the second category of time series comprises NAV time series of share classes belonging to one or more funds other than said fund.

In another aspect, embodiments of the present disclosure provide a non-transitory computer readable medium having computer instructions stored thereon, the computer instructions when executed by a processor cause the processor to perform any of the method embodiments described above.

In a further aspect, embodiments provide a computer system, comprising a processor and a memory storing computer instructions, the computer instructions when executed by the processor causes the processor to perform any of the method embodiments described above.

Brief Description of the Drawings

Further features and advantages of the present disclosure will become apparent from the following description of certain embodiments thereof, given by way of illustration only, not limitation, with reference to the accompanying drawings in which:

FIG. 1 illustrates an example time series anomaly detection system according to an embodiment;
FIG. 2 illustrates a typical structure of a financial fund;
FIG. 3 illustrates an example peer selection process according to an embodiment;
FIG. 4 illustrates an example pre-processing method performed on an input time series according to an embodiment;
FIG. 5 illustrates an example time series anomaly detection process according to an embodiment;
FIG. 6 illustrates an example time series prediction process according to an embodiment;
FIG. 7 illustrates an example anomaly determination process according to an embodiment;
FIG. 8 illustrates an example process for time series prediction using a real-time time series prediction model;
FIG. 9 illustrates an example computer system in which embodiments may be implemented.

Detailed Description of Example Embodiments

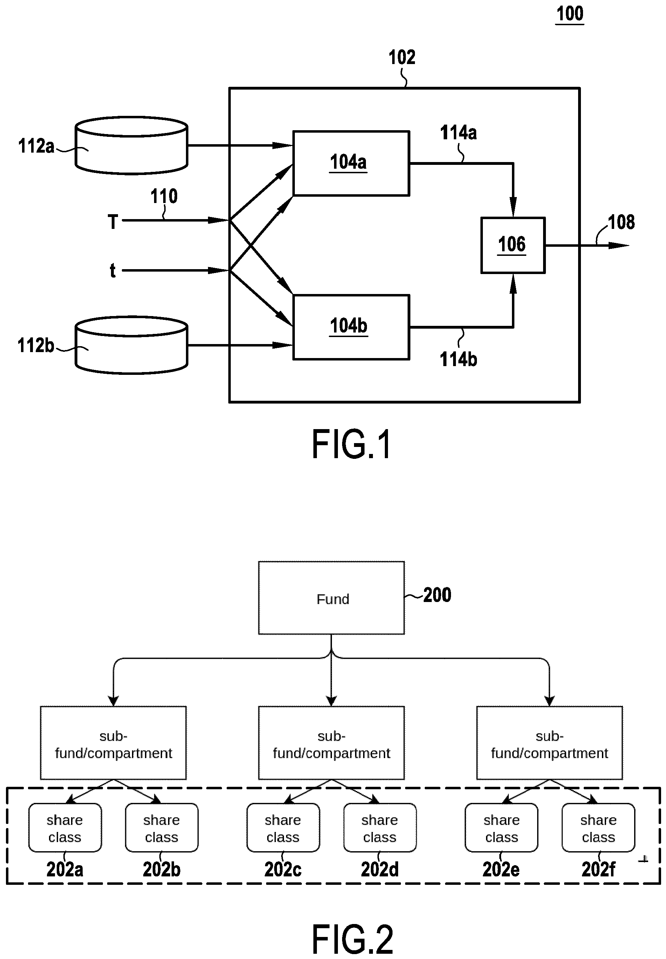

FIG. 1 illustrates an example time series anomaly detection system 100 according to an embodiment. Example system 100 is provided for the purpose of illustration only and is not limiting of embodiments. Example system 100 may be a real-time anomaly detection system, i.e., configured to detect in real-time whether a next received value of a target time series T 110 is an anomaly.

As shown in FIG. 1, example system 100 includes an anomaly detector 102 and first and second databases 112a-b of peer time series. In another embodiment, example system 100 may include only one of databases 112a-b as will be understood by a person of skill in the art based on the teachings herein.

In an embodiment, the first database 112a contains time series that belong to a first category of time series. The first category may be a category that includes the target time series 110.

The target time series 110 can be any time series which is associated with an element (e.g., sensor, data source, etc.) of a system. Within the system, the element may form part of a group of similar elements. The first category may thus include time series associated with the similar elements of the group.

For example, the target time series 110 may be a time series associated with data generated by a particular sensor of a first group of sensors located in a particular area (e.g., tail) of an aircraft. The first category may thus include time series associated with sensors belonging to this first group of sensors.

As another example, the target time series 110 may be a Net Asset Value (NAV) time series of a share class 202a of a financial fund 200 illustrated in FIG. 2. The first category may include NAV time series of share classes belonging to the fund 200 (i.e., NAV time series of shares classes 202a-f).

The selection of time series from the first category to generate the first database 112a is described further below.

In an embodiment, the second database 112b contains time series that belong to a second category of time series. The second category may include one or more categories which do not include the target time series 110.

For example, in a system where the target time series is associated with a system element that belongs to a first group, the second category may include time series associated with system elements that belong to groups other than the first group.

Again, referring to the above aircraft example, the second category may include time series associated with sensors that belong to groups other than the first group. For example, the second category may include time series associated with sensors located on a wing or a nose of the aircraft.

As another example, referring again to the example of the financial fund 200, the second category may comprise NAV time series of shares classes belonging to one or more funds other than the fund 200.

The selection of time series from the second category to generate the second database 112b is described further below.

In operation, at each time step t, system 100 receives a next value T(t) of the target time series 110. The next value T(t) may be received over a data stream that periodically delivers a next value of the target time series 110. The next value T(t) may be subject to noise and may thus be anomalous. For example, in the context of a NAV time series of a share class of a fund, the data stream may be characterized by a high noise-to-signal ratio that obscures the true value of the share class. The high noise-to-signal ratio may be explained, for example, by the noisy market hypothesis.

Anomaly detection system 100 processes the next value T(t) of the target time series 110 and generates an output 108 indicating whether or not the next value T(t) is an anomaly. In an embodiment, anomaly detection system 100 generates output 108 based on the target time series (i.e., the target time series values up to time t-1) and time series contained in the first database 112a and/or the second database 112b.

For the purpose of simplification of presentation, it will be assumed in the following description that system 100 includes both the first and second databases 112a-b and that both databases are used by system 100. However, as would be understood by a person of skill in the art, embodiments are not limited by this example. For example, system 100 may include only one of the first and second databases 112a-b or may be configured to use only one or the other of the first and second databases 112a-b.

In an embodiment, anomaly detector 102 includes a first anomaly detection function 104a, a second anomaly detection function 104b, and an output determination function 106.

The next value T(t) of the target time series 110 is provided respectively to the first and second anomaly detection functions 104a-b. The first and second anomaly detection functions 104a-b are configured to generate respective outputs 114a and 114b. Outputs 114a and 114b each includes an indication of whether or not the next value T(t) of the target time series 110 is an anomaly. As shown, first anomaly detection function 104a processes the next value T(t) based on input from the first database 112a to generate output 114a. Similarly, second anomaly detection function 104b processes the next value T(t) based on input from the second database 112b to generate output 114b.

Output determination function 106 is configured to combine the outputs 114a and 114b to generate the output 108 indicating whether or not the next value T(t) is an anomaly. In an embodiment, output determination function 106 indicates the presence of an anomaly in the next value T(t) if either one of the outputs 114a and 114b indicates an anomaly. Alternatively, the output 108 may be configured to indicate an anomaly only when outputs 114a and 114b agree regarding the presence of an anomaly.

Generating the contents of the first database 112a and the second database 112b will now be described.

In an embodiment, the first database 112a includes the time series that belong to the first category of time series (i.e., the category that includes the target time series 110), other than the target time series 110. In other words, the first database 112a contains intra-category peers of the target time series 110. Referring to the example of FIG. 2, the first database 112a would include the time series of the share classes 202b-f. The use of intra-category peer time series allows for isolating any abnormal behavior due to the target time series itself within the category.

Generally, because they belong to the same category as the target time series 110, the intra-category peer time series that form the first database 112a are frequency aligned with the target time series 110, i.e., they have the same time step period as the target time series 110 and thus contain the same number of data points. Otherwise, the time series may be resampled to match the target time series 110.

In an embodiment, the second database 112b is generated starting from a pool of time series that belong to the second category of time series, i.e., that does not include the target time series 110 (and its intra-category peers). In other words, the pool of time series contains inter-category peers of the target time series 110. The use of inter-category peer time series allows for capturing abnormal behavior that spans different categories.

In the case of a financial fund, the inter-category peers correspond to inter-fund peers of a target share class and allow for isolating anomalous behavior due overarching market fluctuations, for example. Similarly, in the example of an aircraft, the inter-category peers may correspond to peers that span different areas of the aircraft other than the area containing the sensor associated with the target time series. This allows to take into account anomalous behavior that may be due to aircraft wide conditions.

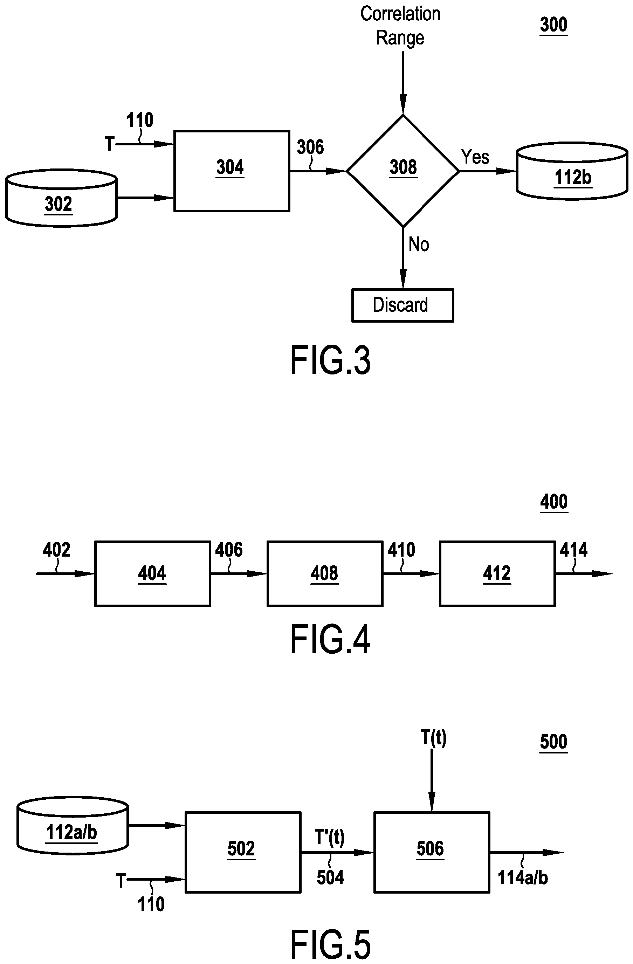

In an embodiment, after the pool of inter-category peers has been constructed, the pool is filtered to obtain the time series of the second database 112b. FIG. 3 illustrates an example peer selection process 300 which may be used to generate the second database 112b starting from a pool of time series, according to an embodiment.

According to process 300, time series from a pool of time series 302 are provided sequentially to a correlator 304. Correlator 304 also receives the target time series 110. Correlator 304 computes a correlation result 306 between the target time series 110 and each time series of the pool 302. In an embodiment, the correlator 304 performs a Pearson's correlation between the two time series.

The correlation result 306 is then input into a comparator 308. Comparator 308 compares the correlation result 306 to a predetermined correlation range. If the correlation result 306 falls within the predetermined correlation range, the time series from the pool 302 is added to the second database 112b. Otherwise, the time series is discarded.

In an embodiment, only a predetermined maximum number k (e.g., $k=5$) of time series is maintained in the second database 112b. If more than $k$ time series meet the predetermined correlation range, the k time series with the highest correlation results are maintained.

In an embodiment, the predetermined correlation range may be determined empirically based on the nature of the time series involved. For example, in the case of time series representing NAVs of share classes of funds, it was determined, in an embodiment, that a range having a correlation minimum of 0.85 and a correlation maximum of 0.93 allows for selecting inter-peer time series that both reflect overall market information and are distant enough from the target time series 110 to allow anomalies to be detected.

Generally, inter-category peer time series may have different frequencies than the target time series 110. As such, the inter-category peer time series may be resampled to match the target time series 110. The resampling may be performed before performing the peer selection process.

Generally, the target time series and/or some of its different peer time series (intra-category and inter-category peer time series) may have wide ranging intrinsic magnitudes. For example, a NAV time series for a share class may range from 10 to 1000 as the share class can be active over several years in the market. Under such wide intrinsic magnitude ranges the anomaly detector 102 may become unstable over time.

To mitigate this problem, in an embodiment, the target time series 110 and its peer time series (intra-category and inter-category) may be pre-processed. This renders the anomaly detector 102 agnostic to the intrinsic magnitude of the time series as well as to a given time interval of the time series. In an embodiment, the pre-processing may be performed prior to performing the peer selection process. As such, it may be performed on every available time series. Alternatively, the pre-processing may be performed after peer selection, i.e., only on the target time series 110 and the peer time series contained in the first and second databases 114a and 114b. In embodiments, it has been shown that pre-processing the time series reduces the convergence time of the anomaly detector 102 and increases its stability.

FIG. 4 illustrates an example pre-processing method 400 which may be used to perform the above-described pre-processing. Example method 400 is provided for the purpose of illustration only.

As shown in FIG. 4, process 400 begins in step 404, which includes applying an input time series 402 to a transformation function. The transformation function may be applied on each data point of the input time series 402. The input time series 402 may be the target time series or a peer time series as discussed above. In an embodiment, the transformation function may be a logarithmic transformation.

Then, in step 408, the transformed input series 406 is sliced into a plurality of segments 410 of predetermined length. The predetermined length may be determined empirically. Alternatively or additionally, the predetermined length may be chosen based on (e.g., equal to) an order p of an autoregressive model (described further below) used in the time series prediction process. The segments 410 may be contiguous.

The segments 410 are then fed sequentially to a scaling function in step 412. The scaling function scales each segment and then re-assembles the scaled segments to obtain a pre-processed time series 414 corresponding to the input time series 402.

In an embodiment, the scaling function scales a segment by scaling each data point of the segment using a scaler. In a particular embodiment, the scaler is selected as a min-max scaler. The min-max scaler may follow the equation:

$$x_{std} = \frac{x - x_{min}}{x_{max} - x_{min}}$$

where $x_{std}$ represents the scaled data point, x represents the original data point, $x_{min}$ represents the minimum data point in the segment, and $x_{max}$ represents the maximum data point in the segment.

FIG. 5 illustrates an example time series anomaly detection process 500 according to an embodiment. Example process 500 is provided for the purpose of illustration only. Example process 500 may be used by each of the first and second anomaly detection functions 104a-b to generate their respective outputs 114a-b. When used by the first anomaly detection function 104a, process 500 relies on the contents of the first database 112a. Conversely, when process 500 is applied by the second anomaly detection function 104b, the contents of the second database 112b are used.

As shown in FIG. 5, process 500 includes a time series prediction step 502 and an anomaly detection step 506.

Step 502 includes generating a prediction T'(t) 504 of the next value T(t) of the target time series 110. The prediction is based on the target time series T 110 (i.e., the target time series values up to time t-1) and the time series contained in the first database 112a or the second database 112b.

Step 506 includes determining whether or not the next value T(t) of the target time series 110 is an anomaly based on the predicted next value T'(t) 504. The output of step 506 may correspond to the output 114a/114b of the first/second anomaly detection function 104a/104b.

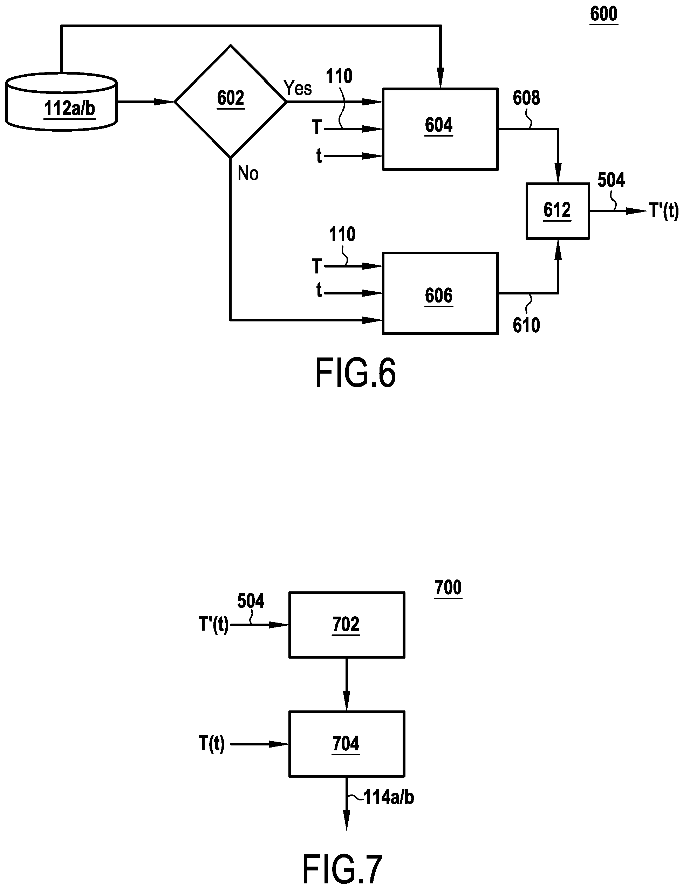

FIG. 6 illustrates an example time series prediction process 600 according to an embodiment. Example process 600 is provided for the purpose of illustration only. Example process 600 may be an implementation of the time series prediction step 502 described above. Process 600 may be based on the contents of first/second database 112a/b as an input database.

As shown in FIG. 6, process 600 begins in step 602, which includes determining whether or not peer time series are contained in the input database (e.g., first/second database 112a/b).

As discussed above, first database 112a contains intra-category peers of the target time series 110. Thus, the first database 112a may or may not contain peer time series depending on whether the target time series has intra-category peers. Additionally, availability of such intra-category peers for use by the system may determine whether or not the first database 112a contains any peer time series.

The second database 112b is generated from a pool of inter-category peers according to a peer selection process. Thus, the second database 112b may or may not contain peer time series depending on whether the target time series has inter-category peers and whether some of these inter-category peers are retained by the peer selection process. Additionally, availability of the selected inter-category peers for use by the system may determine whether or not the second database 112b contains any peer time series.

If no peer time series are found in the input database, process 600 proceeds to step 606, which includes applying a first prediction model to generate a predicted next value 610. Otherwise, the process 500 proceeds to step 604, which includes applying a second prediction model to generate a predicted next value 608. Then, in step 612, the predicted next value 608 or 610, depending on which value is active, is output as the prediction T'(t) 504 of the next value T(t) of the target time series 110. Accordingly, the process 600 adapts its prediction model depending on peers availability.

In an embodiment, the first prediction model is a regression model based on a Long Short-Term Memory (LSTM) Recurrent Neural Network (RNN) architecture.

The first prediction model is trained to learn to model the underlying data. Specifically, the first prediction model is trained to build a regression model of the target time series T 110, which is then used to generate the predicted next value 610.

In an embodiment, the first prediction model receives the target time series T 110 (i.e., the target time series values up to time t-1) as input. In an embodiment, the first prediction model uses a portion (e.g., first 10% in time) of the target time series T 110 as a training set in order to build (or retrain) the regression model of the target time series. The remaining portion of the target time series T 110 may subsequently be used in online prediction (i.e., inference mode), for example, to generate the predicted next value 610 of the target time series T 110.

In an embodiment, the second prediction model is an autoregressive model of order p. In an embodiment, the order p is equal to 10. However, in other embodiments, the order p may be lower or higher depending on the nature of the time series. An autoregressive model may be advantageous due to the very short computing time required for an iteration. This is particularly significant when the model is used in real-time on a very large number of target time series.

The second prediction model is trained to learn to model the underlying data. Specifically, the second prediction model is trained to build a regression model of the target time series T 110, which is then used to generate the predicted next value 608.

In an embodiment, the second prediction model receives, for each of the target time series and the peer time series contained in the input database, a sequence of data points of length equal to p. For example, the sequence of data points may include the data points of the time series for the time steps (T-p, T-p-1, ..., t-1). The sequences of data points are then concatenated to generate a combined sequence of length equal to (p)x(number of peer times series + 1). In an embodiment, the second prediction model uses a portion (e.g., 10%) of the combined sequence as a training set in order to build (or retrain) the regression model of the target time series. The remaining portion of the combined sequence may subsequently be used in online prediction (i.e., inference mode), for example, to generate the predicted next value 608 of the target time series T 110.

In an embodiment, once online prediction has begun, the first prediction model and/or the second prediction model may be retrained periodically, for example every N time steps. The value of N may depend on the update frequency of the target time series (i.e., how often a next value is received). Alternatively or additionally, the value of N may be based on the nature of the data.

For example, in the case of a NAV time series, the model(s) may be retrained whenever a week worth of new data values are available as significant variations can happen in that time period. Additionally, the value N may be selected to reduce the impact of singularities on the system. For example, the value N may be chosen to permit a sufficient number of new data points to be received before each retraining.

In an embodiment, the value of N is determined empirically. For example, the value of N=5 has been determined empirically to maximize performance in the case of daily updating time series, such as NAV time series.

In experiments, it has been determined that the periodic retraining of the first/second prediction model mitigates against model instability.

FIG. 7 illustrates an example anomaly determination process 700 according to an embodiment. Example process 700 is provided for the purpose of illustration only. Example process 700 may be an implementation of the anomaly detection step 506 described above.

As shown in FIG. 7, process 700 begins in step 702 which includes generating a confidence interval 708. In an embodiment, the confidence interval 708 is determined as a function of a mean prediction error computed over a preceding window (errorWindow) of a predetermined length (e.g., window of 10 previous time steps up to t-1). The prediction error at a given time step is calculated as the difference between the predicted value and the actual value of the time series at the given time step.

In an embodiment, the confidence interval is given by a lower bound and an upper bound calculated as a function of the predicted next value T'(t) 504 as follows:

$$lowerBound = T'(t) - \alpha \times meanError\ (errorWindow)$$

$$upperBound = T'(t) + \alpha \times meanError\ (errorWindow)$$

where $\alpha$ is a scaler weight and *meanError (errorWindow)* is the mean prediction error over the preceding window.

Next, step 704 includes determining whether or not the next value T(t) of the target time series falls within the confidence interval 708 to generate the output 114a/b of the first/second anomaly detection function 104a/b. Specifically, if the next value T(t) falls outside the confidence interval 708, the next value T(t) is determined to be anomaly and is indicated as such by the output 114a/b.

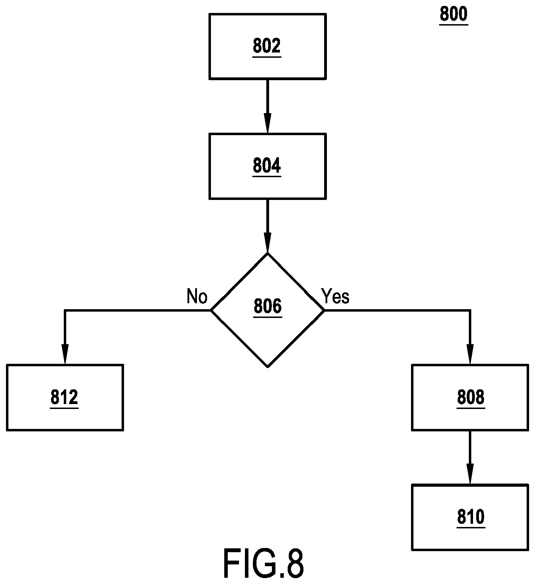

FIG. 8 illustrates an example process 800 for time series prediction using a real-time time series prediction model. Example process 800 is provided for the purpose of illustration only. In an embodiment, example process 800 may be performed by the anomaly detector 102. The real-time time series prediction model may correspond to the second prediction model. However, as would be understood by a person of skill in the art based on the teachings herein, process 800 may be readily adapted for use with the first prediction model, namely by disregarding any mention of peer time series in the process.

As shown in FIG. 8, process 800 begins in step 802, which includes obtaining a first sequence of data points corresponding to a target time series. In an embodiment, the target time series belongs to a first category of time series.

Subsequently, step 804 includes obtaining a second sequence of data points corresponding to a peer time series of the target time series. In an embodiment, the peer time series belongs to the first category of time series or to a second category of time series other than the first category of time series.

In an embodiment, the peer time series belongs to the first category of time series, and step 804 further includes selecting a time series other than the target time series from the first category of time series; and obtaining the second sequence of data points based on the selected time series.

In an embodiment, the peer time series belongs to the second category of time series, and step 804 further includes: creating a pool of time series comprising time series belonging to one or more categories other than to the first category of time series; selecting a time series from the pool of time series having a correlation with the target time series within a predetermined correlation range; and obtaining the second sequence of data points based on the selected time series.

In an embodiment, the first sequence of data points and the second sequence of data points each corresponds to a sequence of data points of length equal to $\rho$. For example, the sequence of data points may include the data points of the time series for the time steps (T-$\rho$, T-$\rho$-1, ..., t-1).

Next, step 806 includes determining whether a predetermined number of time steps have elapsed since a last retraining of the real-time time series prediction model. In an embodiment, the target time series updates daily, and the predetermined number of time steps is equal to 5.

If the answer is yes, the process proceeds to step 808, which includes retraining the real-time time series prediction model using a first portion of the first and second sequences of data points. Then, in step 810, the remaining portion of the first and second sequences of data points is applied to the real-time time series prediction model to predict a next value of the target time series.

If the answer at step 806 is no, the process proceeds to step 812, which includes applying the first sequence of data points and the second sequence of data points in their entirety to the real-time time series prediction model to predict the next value of the target time series.

In an embodiment, the first and second sequences of data points are concatenated to generate a combined sequence of data points. If the answer at step 806 is yes, a portion of the combined sequence is used for retraining the prediction model in step 808, and a remaining portion of the combined data sequence is applied in step 810 to the prediction model to predict the next value of the target time series. Alternatively, if the answer at step 806 is no, then the combined sequence is applied in its entirety to the real-time time series prediction model to predict the next value of the target time series.

In an embodiment, process 800 includes, prior to at least steps 808, 810, and 812, pre-processing the first and second sequences of data points. In an embodiment, the pre-processing comprises for each of the first and second sequences: applying a logarithmic transformation to the data points of the sequence; slicing the sequence into a plurality of segments of predetermined length; scaling the plurality of segments to generate a plurality of scaled segments; and re-assembling the plurality of scaled segments to obtain the pre-processed first and second sequences of data points. In an embodiment, scaling the plurality of segments comprises, for each segment of the plurality of segments, scaling each data point of the segment using a scaler. In an embodiment, the scaler is a min-max scaler.

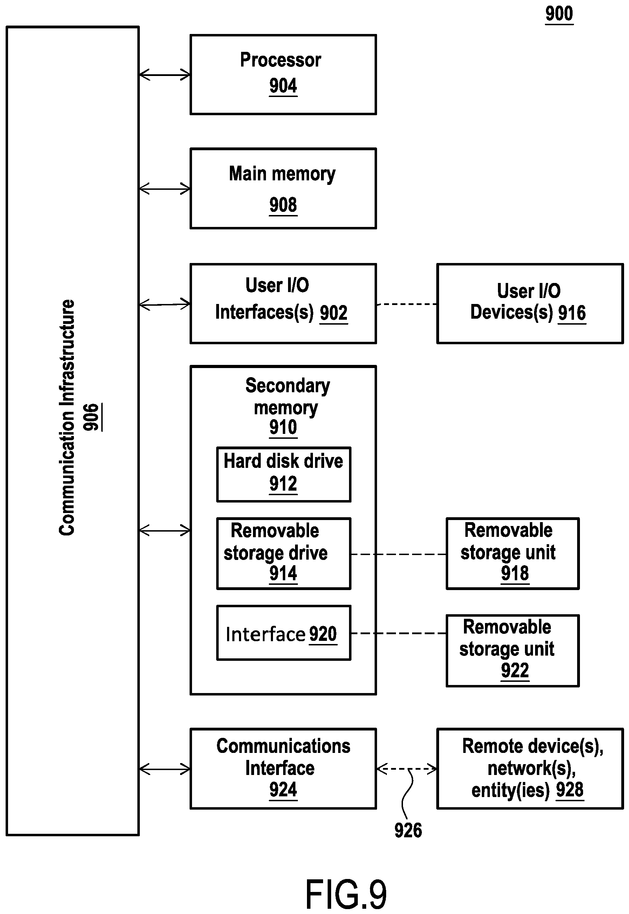

FIG. 9 illustrates an example computer system 900 in which embodiments may be implemented. Computer system 900 includes one or more processors (also called central processing units, or CPUs), such as a processor 904. Processor 904 is connected to a communication infrastructure or bus 906. Processor 904 may be a graphics processing unit (GPU).

Computer system 900 also includes user input/output device(s) 916, such as monitors, keyboards, pointing devices, etc., which communicate with communication infrastructure 906 through user input/output interface(s) 902.

Computer system 900 also includes a main or primary memory 908, such as random access memory (RAM). Main memory 908 may include one or more levels of cache. Main memory 908 has stored therein control logic (i.e., computer software) and/or data that when executed by the one or more processors 904 perform the above described embodiments, including the processes described in FIGs. 3-8.

Computer system 900 may also include one or more secondary storage devices or memory 910. Secondary memory 910 may include, for example, a hard disk drive 912 and/or a removable storage device or drive 914. Removable storage drive 914 may be a floppy disk drive, a magnetic tape drive, a compact disk drive, an optical storage device, a tape backup device, and/or any other storage device/drive.

Removable storage drive 914 may interact with a removable storage unit 918. Removable storage unit 918 includes a computer usable or readable storage device having stored thereon computer software (control logic) and/or data. Removable storage unit 918 may be a floppy disk, magnetic tape, compact disk, DVD, optical storage disk, and/any other computer data storage device. Removable storage drive 914 reads from and/or writes to removable storage unit 918 in a well-known manner.

According to an example embodiment, secondary memory 910 may include other means, instrumentalities or other approaches for allowing computer programs and/or other instructions and/or data to be accessed by computer system 900. Such means, instrumentalities or other approaches may include, for example, a removable storage unit 922 and an interface 920. Examples of the removable storage unit 922 and the interface 920 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 900 may further include a communications or network interface 924. Communications interface 924 enables computer system 900 to communicate and interact with any combination of remote devices, remote networks, remote entities, etc. (individually and collectively referenced by reference number 928). For example, communications interface 924 may allow computer system 900 to communicate with remote devices 928 over a communications path 926, which may be wired and/or wireless, and which may include any combination of LANs, WANs, the Internet, etc. Control logic and/or data may be transmitted to and from computer system 900 via communication path 926.

In an embodiment, a tangible apparatus or article of manufacture comprising a tangible computer useable or readable medium having computer instructions (software) stored thereon is also referred to herein as a computer program product or program storage device. This includes, but is not limited to, computer system 900, main memory 908, secondary memory 910, and removable storage units 918 and 922, as well as tangible articles of manufacture embodying any combination of the foregoing. Such computer instructions, when executed by one or more data processing devices (such as computer system 900), cause such data processing devices to operate as described herein.

Based on the teachings contained in this disclosure, it will be apparent to persons skilled in the relevant art(s) how to make and use the embodiments using data processing devices, computer systems and/or computer architectures other than that shown in FIG. 9.

Example performance evaluation

The proposed anomaly detection system was evaluated against two known anomaly detection systems: "Deep Support Vector Data Description without peers" (deepsvdd without peers) and "Deep Support Vector Data Description with peers" (deepsvdd with peers).

The evaluation was performed on a set of 23 time series. All time series were selected to contain exactly one anomaly, except for one time series which was selected to contain two anomalies.

The evaluation was performed on the same machine setup for all 3 systems (Processor: Core™ i5-6300HQ CPU @ 2.30 GHz; RAM: SODIMM DDR4 Synchronous 2133 MHz).

The performance measures used included the true positive rate (TPR), the false positive rate (FPR), and computing time. The TRP measures the proportion of true anomalies that are correctly identified. It is computed as the number of predicted anomalies that correspond to true anomalies divided by the total number of true anomalies. The FPR measures the proportion of wrongly identified anomalies. It is computed as the number of predicted anomalies that do not correspond to true anomalies divided by the length of the time series (total number of data points). The computing time measure the execution time of the system in seconds.

The table below summarizes the performance results of the 3 systems:

| | true positive rate | false positive rate | computing time (seconds) |
|---|---|---|---|
| **deepsvdd without peers** | 0.543 | 0.247 | 54.480 |

(continued)

|  | true positive rate | false positive rate | computing time (seconds) |
|---|---|---|---|
| **deepsvdd with peers** | 0.500 | 0.355 | 57.936 |
| **Proposed system** | 0.978 | 0.257 | 0.364 |

As shown, the proposed system achieves the highest TPR among the three systems and a low FPR that is very comparable to the lowest achieved FPR (achieved by "deepsvdd without peers"). In addition, the proposed system is dramatically faster than the other two systems.

Additional Variants

Although the present disclosure has been described above with reference to certain specific embodiments, it will be understood that the disclosure is not limited by the particularities of the specific embodiments. Numerous variations, modifications and developments may be made in the above-described embodiments within the scope of the appended claims.

**Claims**

1. A computer-implemented method for operating a real-time time series prediction model for anomaly detection, comprising:

   obtaining (802) a first sequence of data points corresponding to a target time series, the target time series belonging to a first category of time series;
   obtaining (804) a second sequence of data points corresponding to a peer time series of the target time series, the peer time series belonging to the first category of time series or to a second category of time series other than the first category of time series;
   determining (806) whether a predetermined number of time steps have elapsed since a last retraining of the real-time time series prediction model; and
   if the predetermined number of time steps have elapsed since the last retraining of the time series prediction model,

   retraining (808) the real-time time series prediction model using a first portion of the first and second sequences of data points; and
   applying (810) a remaining portion of the first and second sequences of data points to the real-time time series prediction model to predict a next value of the target time series.

2. The computer-implemented method of claim 1, comprising:
   if the predetermined number of time steps have not elapsed since the last retraining of the time series prediction model, applying (812) the first sequence of data points and the second sequence of data points in their entirety to the real-time time series prediction model to predict the next value of the target time series.

3. The computer-implemented method of any of claims 1-2, comprising pre-processing the first and second sequences of data points prior to said retraining (808) and applying (810, 812).

4. The computer-implemented method of claim 3, wherein said pre-processing comprises for each of the first and second sequences:

   applying (404) a logarithmic transformation to the data points of the sequence;
   slicing (408) the sequence into a plurality of segments of predetermined length;
   scaling (412) the plurality of segments to generate a plurality of scaled segments; and
   re-assembling (412) the plurality of scaled segments to obtain the pre-processed first and second sequences of data points.

5. The computer-implemented method of claim 4, wherein scaling (412) the plurality of segments comprises, for each segment of the plurality of segments, scaling each data point of the segment using a scaler.

6. The computer-implemented method of claim 5, wherein the scaler is a min-max scaler.

7. The computer-implemented method of any of claims 1-6, wherein the peer time series belongs to the first category of time series, and wherein obtaining (804) the second sequence of data points corresponding to the peer time series of the target time series comprises:

   selecting a time series other than the target time series from the first category of time series; and
   obtaining the second sequence of data points based on the selected time series.

8. The computer-implemented method of any of claims 1-7, wherein the peer time series belongs to the second category of time series, and wherein obtaining (804) the second sequence of data points corresponding to the peer time series of the target time series comprises:

   creating a pool of time series comprising time series belonging to one or more categories other than to the first category of time series;
   selecting a time series from the pool of time series having a correlation with the target time series within a predetermined correlation range; and
   obtaining the second sequence of data points based on the selected time series.

9. The computer-implemented method of any of claims 1-8, wherein the real-time time series prediction model comprises an autoregressive model.

10. The computer-implemented method of claim 9, comprising concatenating the first sequence of data points and the second sequence of data points to generate a combined sequence of data points; and
    performing said retraining (808) and applying (810, 812) using the combined sequence of data points.

11. The computer-implemented method of any of claims 1-10, wherein the target time series updates daily, and wherein the predetermined number of time steps is equal to 5.

12. The computer-implemented method of any of claims 1-11, wherein the target time series corresponds to a Net Asset Value (NAV) time series of a share class of a fund, wherein the first category of time series comprises NAV time series of share classes belonging to the fund, and wherein the second category of time series comprises NAV time series of share classes belonging to one or more funds other than said fund.

13. The computer-implemented method of any of claims 1-12, comprising:

    receiving the next value of the target time series; and
    determining that the received next value is an anomaly when the received next value falls outside a confidence interval around the predicted next value of the target time series.

14. The computer-implemented method of claim 13, comprising:
    generating the confidence interval as a function of a mean prediction error computed over a preceding window of a predetermined length.

15. A non-transitory computer readable medium having computer instructions stored thereon, the computer instructions, when executed by a processor, cause the processor to perform a method according to any of claims 1-14.

FIG.1

FIG.2

**FIG.3**

**FIG.4**

**FIG.5**

**600**

## FIG.6

**700**

## FIG.7

**800**

**802**

**804**

No **806** Yes

**812**

**808**

**810**

FIG.8

900

Communication Infrastructure 906

Processor 904

Main memory 908

User I/O Interfaces(s) 902 --- User I/O Devices(s) 916

Secondary memory 910

Hard disk drive 912

Removable storage drive 914 --- Removable storage unit 918

Interface 920 --- Removable storage unit 922

Communications Interface 924 <--> Remote device(s), network(s), entity(ies) 928

926

FIG.9

Europäisches
Patentamt

European
Patent Office

Office européen
des brevets

# EUROPEAN SEARCH REPORT

Application Number

EP 20 30 5566

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/027105 A1 (LING LI [US] ET AL) 23 January 2020 (2020-01-23) * figure 1 * * paragraphs [0004], [0011], [0023], [0052] - [0067] * ----- | 1-15 | INV. G06Q40/04 G06F17/18 G06Q40/06 |
| A | CN 110 956 543 A (SHANGHAI INST TECH) 3 April 2020 (2020-04-03) * the whole document * ----- | 1-15 | |

TECHNICAL FIELDS
SEARCHED     (IPC)

G06Q
G06F

The present search report has been drawn up for all claims

| Place of search | Date of completion of the search | Examiner |
|---|---|---|
| The Hague | 30 October 2020 | Meijs, Koen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 30 5566

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2020

| Patent document cited in search report | Publication date | Patent family member(s) | Publication date |
|---|---|---|---|
| US 2020027105 A1 | 23-01-2020 | US 2020027105 A1<br>WO 2020018992 A1 | 23-01-2020<br>23-01-2020 |
| CN 110956543 A | 03-04-2020 | NONE | |

EPO FORM P0459

For more details about this annex : see Official Journal of the European Patent Office, No. 12/82

**EP 3 916 667 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PIMENTEL et al.** A review of novelty detection. University of Oxford, 02 January 2014